(19) Europäisches Patentamt
European Patent Office
Office européen des brevets

(11) EP 4 006 635 A1

(12) EUROPEAN PATENT APPLICATION

(43) Date of publication:
**01.06.2022 Bulletin 2022/22**

(21) Application number: **21209079.9**

(22) Date of filing: **18.11.2021**

(51) International Patent Classification (IPC):
***G02F 1/155*** *(2006.01)* ***G02C 7/10*** *(2006.01)*

(52) Cooperative Patent Classification (CPC):
**G02F 1/155;** G02C 7/101

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2020 JP 2020198476**

(71) Applicant: **Ricoh Company, Ltd.**
**Tokyo 143-8555 (JP)**

(72) Inventor: **TAKEUCHI, Kohji**
**Tokyo, 143-8555 (JP)**

(74) Representative: **SSM Sandmair Patentanwälte Rechtsanwalt Partnerschaft mbB**
**Joseph-Wild-Straße 20**
**81829 München (DE)**

# (54) ELECTROCHROMIC ELEMENT AND ELECTROCHROMIC LIGHT CONTROL LENS

(57) Provided is an electrochromic element including: a first substrate; a first electrode layer including a transparent conductive layer A, a first metal layer, and a transparent conductive layer B; an electrochromic layer; an electrolyte layer; a second electrode layer including a transparent conductive layer C, a second metal layer, and a transparent conductive layer D; and a second substrate. The electrochromic element includes the electrolyte layer between the first electrode layer and the second electrode layer. The transparent conductive layers A to D contain at least one selected from the group consisting of ITO, FTO, and ATO. The first and the second metal layers contain at least one selected from the group consisting of silver alloys containing at least one of palladium, gold, platinum, and copper in silver, and silver. Average thickness of the transparent conductive layers A to D is 5 nm or greater but 12 nm or less.

FIG. 1

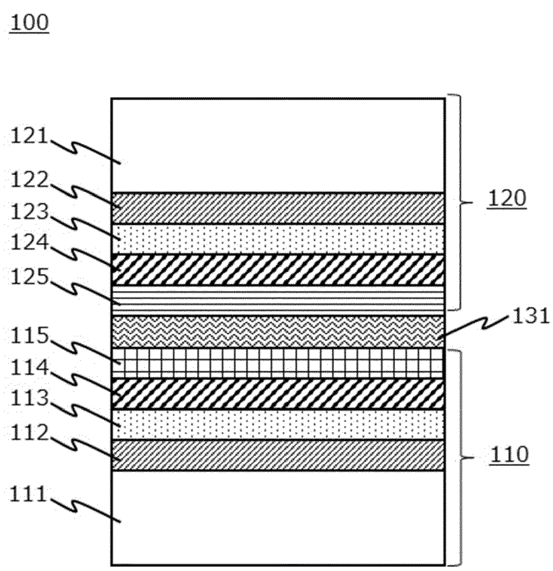




Processed by Luminess, 75001 PARIS (FR)

## Description

### BACKGROUND OF THE INVENTION

#### Field of the Invention

The present disclosure relates to an electrochromic element and an electrochromic light control lens.

#### Description of the Related Art

Electrochromism is a phenomenon that an oxidation-reduction reaction occurs reversibly and a color change occurs reversibly in response to application of a voltage. Electrochromic elements are elements utilizing this electrochromism. To date, many studies have been made into electrochromic elements, regarding that electrochromic elements can realize applications attributable to the characteristics of electrochromism.

As the electrochromic element, an electrochromic elements including, for example, a reducible color developing layer, an oxidizable color developing layer, an oxidizable color developing solid electrolyte layer, and an intermediate layer is proposed (for example, see Japanese Patent No. 4105537). According to this proposal, formation of the intermediate layer can improve a repeating property and a response property, and enables color development/decolorization drives in a few seconds.

An organic electrochromic device that can be produced without a pasting process is also proposed (for example, see Japanese Patent No. 6064761). According to this example, it is possible to realize an electrochromic device having a three-dimensional shape.

Moreover, as a transparent conductive film excellent in flexibility, an electrode including an ITO film, a metal film, and an ITO film laminated in this order is proposed (for example, see Japanese Unexamined Patent Application Publication No. 2012-009148).

### SUMMARY OF THE INVENTION

According to one aspect of the present disclosure, an electrochromic element includes a first substrate, a first electrode layer including a transparent conductive layer A, a first metal layer, and a transparent conductive layer B, an electrochromic layer, an electrolyte layer, a second electrode layer including a transparent conductive layer C, a second metal layer, and a transparent conductive layer D, and a second substrate. The electrochromic element includes the electrolyte layer between the first electrode layer and the second electrode layer. The transparent conductive layer A, the transparent conductive layer B, the transparent conductive layer C, and the transparent conductive layer D contain at least one selected from the group consisting of tin-doped indium oxide (ITO), fluorine-doped tin oxide (FTO), and antimony-doped tin oxide (ATO). The first metal layer and the second metal layer contain at least one selected from the group consisting of silver alloys containing at least one of palladium, gold, platinum, and copper in silver, and silver. An average thickness of the transparent conductive layer A, the transparent conductive layer B, the transparent conductive layer C, and the transparent conductive layer D is 5 nm or greater but 12 nm or less.

### BRIEF DESCRIPTION OF THE DRAWINGS

FIG. 1 is a schematic cross-sectional view illustrating an example of an electrochromic element of the present disclosure;
FIG. 2A is an exemplary cross-sectional view illustrating an example of a precursor of an electrochromic element of the present disclosure;
FIG. 2B is an exemplary cross-sectional view illustrating another example of a precursor of an electrochromic element of the present disclosure;
FIG. 3 is a flowchart illustrating an example of a method for producing an electrochromic element of the present disclosure;
FIG. 4 is a top view illustrating an example of a region of a substrate on which a transparent electrode layer is formed in Example; and
FIG. 5 is a graph plotting an example of a relationship between an average thickness (nm) of metal layers and visible transmittance (%) in Examples.

DESCRIPTION OF THE EMBODIMENTS

(Electrochromic element)

An electrochromic element of the present disclosure includes:

- a first substrate;
- a first electrode layer including a transparent conductive layer A, a first metal layer, and a transparent conductive layer B;
- an electrochromic layer;
- an electrolyte layer;
- a second electrode layer including a transparent conductive layer C, a second metal layer, and a transparent conductive layer D; and
- a second substrate.

The electrochromic element includes the electrolyte layer between the first electrode layer and the second electrode layer.

The transparent conductive layer A, the transparent conductive layer B, the transparent conductive layer C, and the transparent conductive layer D contain at least one selected from the group consisting of tin-doped indium oxide (ITO), fluorine-doped tin oxide (FTO), and antimony-doped tin oxide (ATO).

The first metal layer and the second metal layer contain at least one selected from the group consisting of silver alloys containing at least one of palladium, gold, platinum, and copper in silver, and silver.

An average thickness of the transparent conductive layer A, the transparent conductive layer B, the transparent conductive layer C, and the transparent conductive layer D is 5 nm or greater but 12 nm or less.

The electrochromic element further includes other layers as needed.

The present disclosure has an object to provide an electrochromic element that can be operated at a desired drive voltage with suppression of electrode layers thereof from cracking that may occur by curving.

The present disclosure can provide an electrochromic element that can be operated at a desired drive voltage with suppression of the electrode layers thereof from cracking that may occur by curving.

The present inventor has studied the following problems of the related art.

The related art discloses that an electrochromic element including an intermediate layer has an improved repeating property and an improved response property, and that color development/decolorization drives of the electrochromic element including the intermediate layer are improved. However, there is a problem that the structure of such an electrochromic layer is complicated, and size increase of the structure including multiple layers of inorganic compounds formed by vacuum film deposition is difficult and costly. There is another problem that the substrate is limited to heat-resistant materials such as glass, because it is impossible to avoid influences of heat from the film deposition process. There is yet another problem that inorganic electrochromic reactions are easily affected by moisture, and the colors of inorganic electrochromic reactions are limited to blue-based colors.

The existing organic electrochromic device that can be produced without a pasting process includes many layers that should be coated on a support, and has a problem that coating failure tends to occur, a severe haze occurs, and the films easily peel.

When a conductive layer is provided with a small thickness and flexibility at room temperature in order to prevent an electrode layer from being cracked when curved, the conductive layer gains an increased surface resistance, making operations at a desired drive voltage unavailable. Moreover, in relation with a flexible transparent conductive film, there is a problem that the light transmittance of the electrochromic element is low because the metal layer has a large film thickness. Furthermore, in relation with a flexible transparent conductive film, there is a problem that when the transparent conductive film is curved (thermoformed), the electrode layer (transparent conductive layer) may be cracked, making normal operations unavailable.

The present inventor has found that an electrochromic element can be operated at a desired drive voltage with suppression of the electrode layers thereof from cracking that may occur by curving, provided that the electrochromic element includes a first substrate, a predetermined first electrode layer, an electrochromic layer, an electrolyte layer, a predetermined second electrode layer, and a second substrate, transparent conductive layers A to D of the first electrode layer and the second electrode layer contain a predetermined material, a first metal layer and a second metal layer of the first electrode layer and the second electrode layer contain a predetermined material, and the average thickness of the transparent conductive layers A to D is 5 nm or greater but 12 nm or less. Particularly, with the laminate-type electrode layers including: the transparent conductive layers having an average thickness of 5 nm or greater but 12 nm or less; and the metal layers, the electrochromic element of the present disclosure can be operated at a desired drive voltage with suppression of the electrode layers (transparent conductive layers) from cracking that may occur by curving.

The desired drive voltage is preferably -4 V or higher but 4 V or lower.

The electrochromic element of the present disclosure develops a color or decolorizes through charge transfer and an oxidation-reduction reaction of the electrochromic layer in response to application of a voltage across the first electrode layer and the second electrode layer.

Each layer of the electrochromic element of the present disclosure will be described in detail below.

<First substrate and second substrate>

The first substrate and the second substrate function as supports configured to support the first electrode layer, the electrochromic layer, the electrolyte layer, and the second electrode layer.

The material of the first substrate and the second substrate is not particularly limited and may be appropriately selected depending on the intended purpose so long as the material has flexibility that enables processing of the shape thereof by thermoforming (heating) for curving. Examples of the material of the first substrate and the second substrate include resins such as polycarbonate resins, acrylic resins, polyethylene, polyvinyl chloride, polyester, epoxy resins, melamine resins, phenol resins, polyurethane resins, and polyimide resins. One of these resins may be used alone or two or more of these resins may be used in combination.

The shape, structure, and size of the first substrate and the second substrate are not particularly limited and may be appropriately selected depending on the intended purpose.

The average thickness of the first substrate and the second substrate is preferably 0.2 mm or greater but 1.0 mm or less. When the average thickness of the first substrate and the second substrate is 0.2 mm or greater but 1.0 mm or less, at least one of the first substrate and the second substrate can be shaved to have a desired curved surface after they have been processed into a desired three-dimensional shape by thermoforming (heating) for curving.

As the method for measuring the average thickness of the first substrate and the second substrate, different five positions thereof are measured with a micrometer (available from Mitutoyo Corporation, instrument name: MDH-25MB). The average of the measured values is used as the average thickness.

It is preferable that the first substrate and the second substrate have transparency. The transparency of the first substrate and second substrate, expressed by visible transmittance measured according to JIS T 7333, is preferably 80% or higher, and more preferably 85% or higher. When the visible transmittance of the first substrate and the second substrate measured according to JIS T 7333 is 85% or higher, a sufficient visibility can be obtained when the electrochromic element is used for the lenses of, for example, eyeglasses.

<First electrode layer and second electrode layer>

The first electrode layer includes the transparent conductive layer A, the first metal layer, and the transparent conductive layer B, and further includes other layers as needed.

The second electrode layer includes the transparent conductive layer C, the second metal layer, and the transparent conductive layer D, and further includes other layers as needed.

The transparent conductive layer A, the transparent conductive layer B, the transparent conductive layer C, and the transparent conductive layer D will be collectively referred to simply as transparent conductive layer A to D, when any matters they have in common are described.

«Transparent conductive layers A to D»

The transparent conductive layers A to D are layers that can apply a voltage across the first electrode layer and the second electrode layer in the electrochromic element.

The transparent conductive layer are layers having transparency and conductivity.

The transparency means a visible transmittance of 65% or higher when measured with a spectrophotometer.

The conductivity means a surface resistance of 100 Ω/□ or lower when measured by a four-terminal method.

The transparent conductive layer A is laminated on the substrate.

The transparent conductive layer B is laminated in a manner to contact another surface of the below-described first metal layer opposite to one surface of the below-described first metal layer contacting the transparent conductive layer A.

The transparent conductive layer C is laminated in a manner to contact another surface of the below-described electrolyte layer opposite to one surface of the below-described electrolyte layer contacting the electrochromic layer.

The transparent conducive layer D is laminated in a manner to contact another surface of the below-described second metal layer opposite to one surface of the below-described second metal layer contacting the transparent conductive layer C.

The average thickness of the transparent conductive layers A to D is 5 nm or greater but 12 nm or less and

preferably 5 nm or greater but 10 nm or less. When the average thickness of the transparent conductive layers A to D is 5 nm or greater but 10 nm or less, transparency can be improved. Existing electrochromic elements including transparent conductive layers having an average thickness of 100 nm have a problem that the transparent conductive layers are cracked when curved. In the present disclosure in which the average thickness of the transparent conductive layers A to D is 5 nm or greater but 12 nm or less, it is possible to suppress cracking of the transparent conductive layers.

As the method for measuring the average thickness of the transparent conductive layers A to D, different five positions thereof are measured with a micrometer (available from Mitutoyo Corporation, instrument name: MDH-25MB). The average of the measured values is used as the average thickness.

Examples of the material of the transparent conductive layers A to D include inorganic materials containing one selected from indium oxides (hereinafter, referred to as In oxides), tin oxides (hereinafter, referred to as Sn oxides), and zinc oxides (hereinafter, referred to as Zn oxides). With these materials, the transparent conductive layers can be formed on the first substrate by a vacuum vapor deposition method or a sputtering method, and can have a good transparency and a good conductivity.

Examples of the In oxides include tin-doped indium oxide (ITO).

Examples of the Sn oxides include fluorine-doped tin oxide (FTO) and antimony-doped tin oxide (ATO).

Examples of the Zn oxides include gallium zinc oxide (GaZnO).

Among these materials, InSnO, GaZnO, SnO, $In_2O_3$, and ZnO are preferable.

Other examples of the material of the transparent conductive layers A to D include network electrodes formed of silver, gold, platinum, copper, carbon nanotube, and metal oxides having transparency, and composite layers in which these materials are combined. The network electrode is an electrode obtained by forming, for example, carbon nanotube or any other highly conductive non-transmissive material into a minute network shape to have transmittance. The network electrode can be formed on the first substrate or the second substrate according to the method described in, for example, Japanese Patent No. 6265968.

The shape, structure, and size of the transparent conductive layers A to D are not particularly limited and may be appropriately selected depending on the intended purpose.

The size of the transparent conductive layers A to D is not particularly limited and may be appropriately selected depending on the intended purpose. For example, the transparent conductive layers A to D may cover the entire surface of the first substrate or may partially cover the surface of the first substrate.

Examples of the method for producing the transparent conductive layers A to D include vacuum film deposition methods such as vacuum vapor deposition methods, sputtering methods, and ion plating methods. When the transparent conductive layers can be formed by coating, examples of the producing method include spin coating methods, casting methods, microgravure coating methods, gravure coating methods, bar coating methods, roll coating methods, wire bar coating methods, dip coating methods, slit coating methods, capillary coating methods, spray coating methods, nozzle coating methods, and various printing methods such as gravure printing methods, screen printing methods, flexographic printing methods, offset printing methods, reverse printing methods, and inkjet printing methods.

«First metal layer and second metal layer»

The first metal layer and the second metal layers are configured to suppress increase in the surface resistance due to the thickness saving of the transparent conductive layers.

In order to suppress increase in the surface resistance due to the average thickness of the transparent conductive layers A to D being 5 nm or greater but 12 nm or less, the metal layers are inserted between the transparent conductive layers to constitute the electrode layers.

The first metal layer is laminated in a manner to contact another surface of the transparent conductive layer A opposite to one surface of the transparent conductive layer A facing the first substrate.

The second metal layer is laminated in a manner to contact another surface of the transparent conductive layer C opposite to one surface of the transparent conductive layer C contacting the below-described electrolyte layer.

As the constituent material, the first metal layer and the second metal layer contain at least one selected from the group consisting of silver alloys containing at least one of palladium, gold, platinum, and copper in silver, and silver, and may further contain other materials as needed.

The silver alloy means a substance that contains silver as a main component, and additionally contains at least one metal selected from palladium, gold, platinum, and copper. The content of the metal to be added is preferably 0.1 atm% or greater but 10 atm% or less. When the content of the metal to be added is 0.1 atm% or greater, a sufficient durability is obtained. When the content of the metal to be added is 10 atm% or less, it is possible to suppress degradation of visible transmittance and increase in the sheet resistance.

The size of the first metal layer and the second metal layer is not particularly limited and may be appropriately selected depending on the intended purpose. The same size as the transparent conductive layers is preferable in order that the first metal layer and the second metal layer can fully cover the transparent conductive layers.

The average thickness of the first metal layer and the second metal layer is preferably 5 nm or greater but 8 nm or less. When the average thickness of the first metal layer and the second metal layer is 5 nm or greater, a sufficient effect of suppressing increase in the surface resistance of the first electrode layer and the second electrode layer is obtained. When the average thickness of the first metal layer and the second metal layer is 8 nm or less, transparency of the first electrode layer and the second electrode layer can be secured.
As the method for measuring the average thickness of the first metal layer and the second metal layer, different five positions thereof are measured with, for example, a spectroscopic ellipsometer or a stylus-type step gauge. The average of the measured values is used as the average thickness. Examples of the spectroscopic ellipsometer include M-2000 (available from J.A. Woollam Company).
In the first electrode layer, the transparent conductive layer A, the first metal layer, and the transparent conductive layer B are laminated in this order. In the second electrode layer, the transparent conductive layer C, the second metal layer, and the transparent conductive layer D are laminated in this order. Therefore, in the first electrode layer and the second electrode layer, the layers are electrically coupled because the layers are laminated contacting each other.
As can be seen from the above, because the electrochromic element of the present disclosure includes laminate electrode layers including the first metal layer and the second metal layer, the electrochromic element can be operated at a desired drive voltage with suppression of increase in the surface resistance due to thickness saving of the transparent conductive layers A to D to 5 nm or greater but 12 nm or less.
Examples of the method for producing the metal layers include vacuum film deposition methods such as vacuum vapor deposition methods, sputtering methods, and ion plating methods. When the material of the metal layers is a coatable material, examples of the producing method include spin coating methods, casting methods, microgravure coating methods, gravure coating methods, bar coating methods, roll coating methods, wire bar coating methods, dip coating methods, slit coating methods, capillary coating methods, spray coating methods, nozzle coating methods, and various printing methods such as gravure printing methods, screen printing methods, flexographic printing methods, offset printing methods, reverse printing methods, and inkjet printing methods.
The visible transmittance (%) of the first electrode layer is preferably 70% or higher and more preferably 80% or higher. When the visible transmittance (%) of the first electrode layer is 70% or higher, a sufficient visibility can be obtained when the electrochromic element is used for the lenses of, for example, eyeglasses.
The visible transmittance (%) of the second electrode layer is preferably 70% or higher and more preferably 80% or higher.
As the method for measuring the visible transmittance (%) of the first electrode layer, measurement under the measurement conditions described below is performed three times using a LCD evaluating apparatus (available from Otsuka Electronics Co., Ltd., instrument name: LCD-5200) after the first electrode layer is formed on the first substrate in a below-described method for producing an electrochromic element. The average of the three measured values is used as the visible transmittance (%). As the method for measuring the visible transmittance (%) of the second electrode layer, the same method as used for the first electrode layer can be used to measure the visible transmittance after the second electrode layer is formed on the second substrate.

<Measurement conditions>

- Light source: D65
- Range of wavelengths to be measured: from 380 nm through 780 nm

The average thickness of the first electrode layer and the second electrode layer is preferably 5 nm or greater but 12 nm or less and more preferably 5 nm or greater but 8 nm or less.
As the method for measuring the average thickness of the first electrode layer and the second electrode layer, different five positions thereof are measured with, for example, a spectroscopic ellipsometer or cross-sectional SEM observation. The average of the measured values is used as the average thickness. In the present disclosure, the measurement is performed using a spectroscopic ellipsometer M-2000 (available from J.A. Woollam Company).

<Electrochromic layer>

The electrochromic layer contacts another surface of the transparent conductive layer B opposite to one surface of the transparent conductive layer B contacting the first metal layer.
The electrochromic layer contains an electrochromic material, and further contains other components as needed.
Examples of the electrochromic material include inorganic electrochromic compounds and organic electrochromic compounds.

Examples of the inorganic electrochromic compounds include tungsten oxide, molybdenum oxide, iridium oxide, and titanium oxide.

Examples of the organic electrochromic compounds include viologen, rare earth phthalocyanine, and styryl.

As the electrochromic material, a well-known conductive polymers that exhibits electrochromism may also be used.

Examples of the conductive polymers include polypyrrole, polythiophene, and polyaniline, or derivatives thereof.

Examples of the electrochromic materials that are polymer-based or pigment-based electrochromic compounds include low-molecular-weight organic electrochromic compounds such as azobenzene-based, anthraquinone-based, diarylethene-based, dihydroprene-based, dipyridine-based, styryl-based, styryl spiropyran-based, spirooxazine-based, spirothiopyran-based, thioindigo-based, tetrathiafulvalene-based, terephthalic acid-based, triphenylmethane-based, triphenylamine-based, naphthopyran-based, viologen-based, pyrazoline-based, fenadine-based, phenylene diamine-based, phenoxazine-based, phenothiazine-based, phthalocyanine-based, fluoran-based, fulgide-based, benzopyran-based, and metallocene-based compounds, and conductive polymers such as polyaniline and polythiophene.

Among these electrochromic materials, viologen-based compounds or dipyridine-based compounds are preferable because these compounds have a low color develop ment/decolorization potential and a good color value.

Examples of the viologen-based compounds include the compounds described in, for example, Japanese Patent No. 3955641 and Japanese Unexamined Patent Application Publication No. 2007-171781.

Examples of the dipyridine-based compounds include the compounds described in, for example, Japanese Unexamined Patent Application Publication No. 2007-171781 and Japanese Unexamined Patent Application Publication No. 2008-116718.

Among these compounds, a dipyridine-based compound represented by General formula 1 below is preferable because it has a good color value of color development.

[General formula 1]

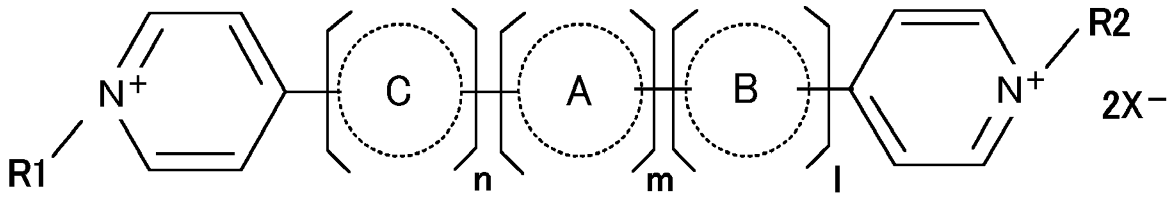

In General formula 1, R1 and R2 each independently represent an alkyl group or an aryl group that contains from 1 through 8 carbon atoms and may contain a substituent. At least one of R1 and R2 contains a substituent selected from COOH, $PO(OH)_2$, and $Si(OC_kH_{2k+1})_3$ (where k is from 1 through 20). X represents a monovalent anion, and is not particularly limited so long as X stably forms a pair with the cationic moiety, and examples of X include a Br ion($Br^-$), a Cl ion ($Cl^-$), a $ClO_4$ ion ($ClO_4^-$), a $PF_6$ ion ($PF_6^-$), and a $BF_4$ ion ($BF_4^-$). "n", "m", and "l" represent 0, 1, or 2. A, B, and C each independently represent an alkyl group, an aryl group, or a heterocyclic group that contains from 1 through 20 carbon atoms and may contain a substituent.

Examples of metal complex-based and metal oxide-based electrochromic compounds include inorganic electrochromic compounds such as titanium oxide, vanadium oxide, tungsten oxide, indium oxide, iridium oxide, nickel oxide, and Prussian blue.

As the structure of the electrochromic layer, it is preferable to use a structure in which conductive or semiconductor particles carry an organic electrochromic compound.

Specifically, this structure is obtained by sintering particles having a particle diameter of about from 5 nm through 50 nm on a surface of an electrode, and adsorbing an organic electrochromic compound containing a polar group such as a phosphonic acid, a carboxyl group, and a silanol group to the surface of the particles.

This structure is responsive at a higher speed than existing electrochromic display elements, because this structure enables efficient injection of electrons into the organic electrochromic compound utilizing the large surface effect of the particles.

Moreover, use of particles enables formation of a transparent film as a display layer, which can thus exhibit a high color developing density of the electrochromic pigment.

The conductive or semiconductor particles may carry a plurality of kinds of organic electrochromic compounds.

The conductive or semiconductor particles are not particularly limited and may be appropriately selected depending on the intended purpose. A metal oxide is preferable.

Examples of the material of the metal oxide include metal oxides that contain as the main component, for

example, titanium oxide, zinc oxide, tin oxide, zirconium oxide, cerium oxide, yttrium oxide, boron oxide, magnesium oxide, strontium titanate, potassium titanate, barium titanate, calcium titanate, calcium oxide, ferrite, hafnium oxide, tungsten oxide, iron oxide, copper oxide, nickel oxide, cobalt oxide, barium oxide, strontium oxide, vanadium oxide, aluminosilicic acid, calcium phosphate, and aluminosilicate. One of these metal oxides may be used alone or two or more of these metal oxides may be used in combination.

Considering electric properties such as electrical conductivity and physical properties such as optical properties, one selected from titanium oxide, zinc oxide, tin oxide, zirconium oxide, iron oxide, magnesium oxide, indium oxide, and tungsten oxide or a mixture thereof can display a color at an excellent color development/decolorization response speed. Particularly, titanium oxide can display a color at an excellent color development/decolorization response speed.

The shape of the conductive or semiconductor particles is not particularly limited, but a shape having a large surface area per unit volume (hereinafter, referred to as specific surface area) is used in order to efficiently carry an electrochromic compound.

For example, when the particles are an aggregate of nanoparticles, the particles can carry an electrochromic compound more efficiently and enable an excellent display contrast ratio between a color developed state and a decolorized state, because an aggregate of nanoparticles has a large specific surface area.

The average thickness of the electrochromic layer is not particularly limited, may be appropriately selected depending on the intended purpose, and is preferably 0.2 micrometers or greater but 5.0 micrometers or less. When the average thickness of the electrochromic layer is 0.2 micrometers or greater, a sufficient color developing density can be obtained. When the average thickness of the electrochromic layer is 5.0 micrometers or less, it is possible to save the production costs and suppress visibility degradation due to coloring.

It is possible to form the electrochromic layer and the conductive or semiconductor particles by vacuum film deposition, but it is preferable to form them by coating them in the form of a particle-dispersed paste in terms of productivity.

<Electrolyte layer>

The electrolyte layer is laminated in a manner to contact another surface of the electrochromic layer opposite to one surface of the electrochromic layer contacting the transparent conductive layer B.

The electrolyte layer is a solid electrolyte layer, and is formed as a film supporting an electrolyte in a photocurable or thermosetting resin.

It is preferable to mix inorganic particles in the electrolyte layer in order to control the average thickness.

It is preferable to form the electrolyte layer as a film obtained by preparing a solution in which the inorganic particles, a curable resin, and an electrolyte are mixed, and coating the solution over the electrochromic layer, and subsequently curing the solution with light or heat. The electrolyte layer may also be a film obtained by previously forming a porous inorganic particle layer, subsequently mixing a curable resin and an electrolyte to prepare a solution that can permeate the inorganic particle layer, coating the solution over the electrochromic layer, and subsequently curing the solution with light or heat.

Further, when the electrochromic layer is a layer in which the conductive or semiconductor nanoparticles carry an electrochromic compound, the electrolyte layer may be a film obtained by mixing a curable resin and an electrolyte to prepare a solution that can permeate the electrochromic layer, coating the solution over the electrochromic layer, and subsequently curing the solution with light or heat.

Examples of the solution include solutions obtained by dissolving liquid electrolytes such as ionic liquids or solid electrolytes in solvents.

Examples of the material of the electrolyte include inorganic ion salts such as alkali metal salts and alkali earth metal salts, quaternary ammonium salts, and acid and alkali supporting electrolytes. Specific examples of the material of the electrolyte include $LiClO_4$, $LiBF_4$, $LiAsF_6$, $LiPF_6$, $LiCF_3SO_3$, $LiCF_3COO$, KCl, $NaClO_3$, NaCl, $NaBF_4$, NaSCN, $KBF_4$, $Mg(ClO_4)_2$, and $Mg(BF_4)_2$.

The ionic liquid is not particularly limited and may be appropriately selected depending on the intended purpose from among ionic liquids generally studied ad reported. Examples of the ionic liquid include organic ionic liquids.

Examples of the organic ionic liquids include compounds having a molecular structure that is liquid in a wide temperature range including room temperature.

The molecular structure is formed of a cationic component and an anionic component.

Examples of the cationic component include: imidazole derivatives such as N,N-dimethyl imidazole salt, N,N-methylethyl imidazole salt, and N,N-methylpropyl imidazole salt; aromatic salts such as pyridinium derivatives such as N,N-dimethyl pyridinium salt and N,N-methylpropyl pyridinium salt; and aliphatic quaternary ammonium-based compounds such as tetraalkyl ammonium such as trimethylpropyl ammonium salt, trimethylhexyl ammonium salt, and triethylhexyl ammonium salt.

The anionic component is preferably a fluorine-containing compound in terms of stability in the atmosphere. Examples of the anionic component include $BF4^-$, $CF_3SO_3^-$, $PF_4^-$, $(CF_3SO_2)_2N^-$, and $B(CN_4)^-$. An ionic liquid prescribed

based on any combination between these cationic components and anionic components can be used.

Examples of the solvent include propylene carbonate, acetonitrile, γ-butyrolactone, ethylene carbonate, sulfolane, dioxolane, tetrahydrofuran, 2-methyl tetrahydrofuran, dimethyl sulfoxide, 1,2-dimethoxyethane, 1,2-ethoxymethoxyethane, polyethylene glycol, alcohols, and mixture solvents thereof.

Examples of the curable resin include common materials such as photocurable resins and thermosetting resins such as acrylic resins, urethane resins, epoxy resins, vinyl chloride resins, ethylene resins, melamine resins, and phenol resins. Among these curable resins, materials having a high compatibility with the electrolyte are preferable. As such curable resins, ethylene glycol derivatives such as polyethylene glycol and polypropylene glycol are preferable.

A photocurable resin is preferable as the curable resin because the element can be produced at a low temperature in a short time, compared with thermal polymerization or a thin film forming method by solvent evaporation.

A solid solution of an oxyethylene chain and oxypropylene chain-containing matrix polymer serving as the curable resin and an ionic liquid is preferable as the electrolyte because a solid solution tends to satisfy both of hardness and a high ionic conductance.

The inorganic particles are not particularly limited and may be appropriately selected depending on the intended purpose so long as the inorganic particles are formed of a material that can form a porous layer and support the electrolyte and the curable resin. A material having a high insulating property, a high transparency, and a high durability is preferable in terms of, for example, stability of electrochromic reactions and visibility. Specific examples of the material include oxides or sulfides of silicon, aluminum, titanium, zinc, and tin, or mixtures thereof.

The size (average particle diameter) of the inorganic particles is not particularly limited, may be appropriately selected depending on the intended purpose, and is preferably 10 nm or greater but 10 micrometers or less and more preferably 10 nm or greater but 100 nm or less.

<Other layers>

The other layers are not particularly limited and may be appropriately selected depending on the intended purpose. Examples of the other layers include a hard coat layer, and a deterioration preventing layer.

«Hard coat layer»

The hard coat layer is a layer configured to suppress elongation or shrinkage of the first substrate and the second substrate due to heating.

It is preferable to dispose the hard coat layer at least partially on surfaces of the first substrate and the second substrate contacting the first electrode layer and the second electrode layer. It is more preferable to dispose the hard coat layer all over the surfaces of the first substrate and the second substrate contacting the first electrode layer and the second electrode layer.

Providing the hard coat layer can improve the effect of suppressing the transparent conductive layers included in the first electrode layer and the second electrode layer from being cracked due to heating-induced elongation or shrinkage of the first substrate and the second substrate contacting the first electrode layer and the second electrode layer.

The coefficient of thermal expansion of the hard coat layer at a processing temperature (145 degrees C) is preferably 1.0% or lower. The coefficient of thermal expansion is measured by a tensile mode of a thermomechanical analysis (TMA).

The material of the hard coat layer is not particularly limited and may be appropriately selected depending on the intended purpose so long as the material can suppress elongation or shrinkage of the first substrate and the second substrate due to heating.

The shape, structure, and size of the hard coat layer are not particularly limited and may be appropriately selected depending on the intended purpose.

The average thickness of the hard coat layer is not particularly limited, may be appropriately selected depending on the intended purpose, and is preferably, for example, 1.0 micrometer or greater but 10 micrometers or less and more preferably 3.5 micrometers or greater but 6 micrometers or less. The average thickness of the hard coat layer is the average of different five positions measured with, for example, a spectroscopic ellipsometer, cross-sectional SEM, or TEM observation. In the present disclosure, the average thickness is measured with a spectroscopic ellipsometer M-2000 (available from J.A. Woollam Company).

«Deterioration preventing layer»

The deterioration preventing layer is laminated in a manner to contact another surface of the electrolyte layer opposite to one surface of the electrolyte layer contacting the electrochromic layer. It is preferable to laminate the deterioration preventing layer in a manner to be disposed between the electrolyte layer and the transparent conductive

layer C, and to dispose the deterioration preventing layer in a manner to contact the electrolyte layer and the transparent conductive layer C.

The deterioration preventing layer is a layer configured to undergo a reverse chemical reaction from the electrochromic layer to take an electric charge balance and suppress corrosion or deterioration of the second electrode layer due to an irreversible oxidation-reduction reaction. The deterioration preventing layer can improve the repeating stability of the electrochromic element. The reverse reaction of the deterioration preventing layer also includes the deterioration preventing layer's functioning as a capacitor, in addition to undergoing oxidation-reduction.

The material of the deterioration preventing layer is not particularly limited so long as the material serves the function of preventing corrosion of the first electrode layer and the second electrode layer due to irreversible oxidation-reduction reactions.

Examples of the material of the deterioration preventing layer include antimony tin oxide, nickel oxide, titanium oxide, zinc oxide, tin oxide, and conductive or semiconductor metal oxides containing a plurality of these materials.

Moreover, so long as coloring of the deterioration preventing layer does not become a problem, the same material as the electrochromic material can be used as the deterioration preventing layer.

Moreover, particularly when producing the electrochromic element as an optical element such as a lens needed to have transparency, it is preferable to use a highly transparent material as the deterioration preventing layer. It is preferable to use n-type semiconductive oxide particles (n-type semiconductive metal oxide) as such a material. Specific examples of such a material include titanium oxide, tin oxide, and zinc oxide formed of particles having a primary particle diameter of 100 nm or less, or compound particles or mixtures containing a plurality of kinds of these particles.

When using the deterioration preventing layer, it is preferable to form the electrochromic layer using a material that changes colors through an oxidation reaction. This facilitates reduction of (electron injection into) the n-type semiconductive metal oxide at the same time as an oxidation reaction of the electrochromic layer, making it possible to reduce the drive voltage.

In such an embodiment, an organic polymer material is preferable as the electrochromic material. When the electrochromic material is an organic polymer material, a film of the electrochromic material can be formed easily through, for example, a formation process by coating, and color adjustment or control of the electrochromic material is available based on the molecular structure.

Examples of the organic polymer material include the materials reported in, for example, "ChemiStry of MaterialS review 2011.23, 397-415 Navigating the Color Palette of Solution-ProceSSable Electrochromic PolymerS (ReynoldS)", "MacromoleculeS 1996.29 7629-7630 (ReynoldS)", and "Polymer journal, Vol. 41, No. 7, Electrochromic Organic Matallic Hybrid PolymerS".

More specific examples of the organic polymer material include poly(3,4-ethylene dioxythiophene)-based materials, and complex forming polymers of bis(terpyridine) and iron ions.

On the other hand, examples of highly transparent p-type semiconductive layer materials serving as the deterioration preventing layer include organic materials containing nitroxyl radicals (NO radicals).

Examples of the organic materials containing nitroxyl radicals (NO radicals) include derivatives of 2,2,6,6-tetramethyl piperidine-N-oxyl (TEMPO), or polymer materials of the derivatives.

Alternatively, instead of forming the deterioration preventing layer, it is possible to mix a deterioration preventing layer material in the electrolyte layer and impart a deterioration preventing function to the electrolyte layer.

Examples of the method for forming the deterioration preventing layer include vacuum vapor deposition methods, sputtering methods, and ion plating methods. When the material of the deterioration preventing layer is a coatable material, examples of the forming method include spin coating methods, casting methods, microgravure coating methods, gravure coating methods, bar coating methods, roll coating methods, wire bar coating methods, dip coating methods, slit coating methods, capillary coating methods, spray coating methods, nozzle coating methods, and various printing methods such as gravure printing methods, screen printing methods, flexographic printing methods, offset printing methods, reverse printing methods, and inkjet printing methods.

The average thickness of the deterioration preventing layer is not particularly limited, may be appropriately selected depending on the intended purpose, and is preferably 1 micrometer or greater but 10 micrometers or less and more preferably 2 micrometers or greater but 5 micrometers or less. The average thickness of the deterioration preventing layer is the average of five different positions measured with a spectroscopic ellipsometer, cross-sectional SEM, or TEM observation. In the present disclosure, the measurement is performed using a spectroscopic ellipsometer M-2000 (available from J.A. Woollam Company).

The shape of the electrochromic element of the present disclosure is not particularly limited. Examples of the shape of the electrochromic element include a flat plate shape, and a shape having a three-dimensionally curved surface.

Particularly, the electrochromic element of the present disclosure can be operated at a desired drive voltage with suppression of the electrode layers from cracking that may occur by curving. Therefore, it is preferable that the electrochromic element have a three-dimensionally curved surface.

The curvature radius of the three-dimensionally curved surface is preferably 60 mm or greater but 130 mm or

less and more preferably 65 mm or greater but 87 mm or less. The curvature radius range of the three-dimensionally curved surface of 65 mm or greater but 87 mm or less corresponds to a range of from 6 curve through 8 curve of eyeglass lenses. The curve value is defined by the following formula. When the refractive index of a lens is 1.523, a curvature radius of 87 mm corresponds to 6 curve, and a curvature radius of 65 mm corresponds to 8 curve.

$$\text{Curve value} = (\text{lens's refractive index} - 1)/\text{curvature radius}$$

The curvature radius can be measured by contactless measuring methods and stylus-type measuring methods. Examples of the instrument used in the contactless measuring methods include NH-3PS (available from Mitaka Kohki Co., Ltd.).

<Applications>

The applications of the electrochromic element of the present disclosure are not particularly limited and may be appropriately selected depending on the intended purpose. The electrochromic element of the present disclosure may be used as a finished product, or may be used as a part of, for example, another electronic device.

The electrochromic element of the present disclosure can be suitably used as a light control device (electrochromic light control device) utilizing the electrochromic phenomenon. Examples of the light control device include electrochromic devices, electrochromic displays, large-size display panels such as display panels for stock prices, light control elements such as light control lenses, anti-glare mirrors, light control glasses, and light control films, low-voltage drive elements such as touch panel-type key switches, optical switches, optical memories, electronic paper, and electronic albums.

The electrochromic element of the present disclosure can be operated at a desired drive voltage with suppression of the electrode layers from cracking that may occur by curving. Therefore, the electrochromic element of the present disclosure can be particularly suitably used for lenses of sports sunglasses and ski goggles having a smaller curvature radius (i.e., a deeper curve) than ordinary eyeglass lenses, and shields used on helmets for motorcycles.

When the electrochromic element of the present disclosure includes a three-dimensionally curved surface at at least a part thereof, the electrochromic element can be used in a particularly suitable condition, provided that the curvature radius of the three-dimensionally curved surface is 60 mm or greater but 130 mm or less.

An embodiment of the electrochromic element of the present disclosure will be described withe reference to the drawings.

FIG. 1 is an exemplary view illustrating an example of the electrochromic element of the present disclosure.

As illustrated in FIG. 1, an electrochromic element 100 includes a first electrode layer formed of a transparent conductive layer A 112, a first metal layer 113, and a transparent conductive layer B 114, and an electrochromic layer 115 in this order on a first substrate 111. The electrochromic element 100 also includes a second electrode layer formed of a transparent conductive layer D 122, a second metal layer 123, and a transparent conductive layer C 124, and a deterioration preventing layer 125 in this order on a second substrate 121. The electrochromic element 100 also includes an electrolyte layer 131 between the electrochromic layer 115 and the deterioration preventing layer 125.

Next, an example of the method for producing the electrochromic element will be described with reference to FIG. 2A and FIG. 2B.

First, a first electrode layer and an electrochromic layer 115 are formed on a first substrate 111. Hereinafter, the product obtained by forming the first electrode layer and the electrochromic layer 115 on the first substrate 111 will be referred to as precursor A110 (see FIG. 2A). At the same time, a second electrode layer and a deterioration preventing layer 125 are formed on a second substrate 121. Hereinafter, the product obtained by forming the second electrode layer and the deterioration preventing layer 125 on the second substrate 121 will be referred to as precursor B120 (see FIG. 2B).

An electrolyte layer forming liquid containing a curable resin is coated over an exposed surface of the electrochromic layer 115 of the precursor A110 formed, to form an electrolyte layer 131, the precursor A110 and the precursor B120 are pasted with each other, and the curable resin is cured, to produce a flat plate-like electrochromic element 100.

The method for curving the electrochromic element of the present disclosure is not particularly limited and may be appropriately selected depending on the intended purpose. Examples of the method include a method of inserting the electrochromic element between molding dies while applying heat and pressure.

The temperature of the molding dies during thermoforming is preferably a temperature lower than the glass transition temperature Tg (degree C) of the substrate material by 15 degrees C, more preferably a temperature lower than Tg by from 10 degrees C through 5 degrees C.

The shape of the molding dies is not particularly limited and may be appropriately selected depending on the intended purpose so long as the molding dies can curve the electrochromic element. Examples of the molding dies

include convex molding dies having a spherical shape.

The curvature radius of the curved surface of the molding dies is not particularly limited and may be appropriately selected depending on the intended purpose.

(Electrochromic light control lens)

An electrochromic light control lens of the present disclosure includes the electrochromic element of the present disclosure and further includes other members as needed.

The electrochromic light control lens of the present disclosure is obtained by processing the electrochromic element of the present disclosure into a shape having a desired three-dimensionally curved surface by thermoforming, and subsequently adding a resin to the concave surface-side of the electrochromic element to thicken the substrate.

By shaving the thickened substrate, it is possible to form the substrate into a desired curved surface. This enables obtaining an electrochromic light control lens by lens processing (e.g., diopter processing) suited to user-specific conditions.

There is no need for preparing molding dies and parts for each and every product shape of the electrochromic light control lens of the present disclosure. This facilitates production of a wide variety of products in small lots.

Examples

The present disclosure will be described below by way of Examples. The present disclosure should not be construed as being limited to these Examples.

(Verification experiments 1 to 5)

A hard coat layer-added polycarbonate substrate having a thickness of 0.3 mm (product number: UC2-075, obtained from Meihan Vacuum Industry Co., Ltd.) was cut into an oval shape having a longer diameter of 80 mm and a shorter diameter of 55 mm, to prepare the substrate as a first substrate.

Next, ITO serving as a transparent conductive layer A was formed by a sputtering method in a manner that the entire surface of the substrate was coated with ITO with an average thickness of 10 nm.

Further, the entire surface of the transparent conductive layer A was coated with a first metal layer formed of an alloy containing palladium and copper in silver serving as a main component (obtained from Furuya Metal Co., Ltd., product name: APC-TR) with an average thickness of 5 nm. Moreover, the entire surface of the first metal layer formed was coated with ITO serving as a transparent conductive layer B with an average thickness of 10 nm.

A hard coat layer-added polycarbonate substrate having a thickness of 0.3mm (product number: UC2-075, obtained from Meihan Vacuum Industry Co., Ltd.) was cut into an oval shape having a longer diameter of 80 mm and a shorter diameter of 55 mm, to prepare the substrate as a second substrate.

Next, ITO serving as a transparent conductive layer C was formed by a sputtering method in a manner that the entire surface of the substrate was coated with ITO with an average thickness of 10 nm.

Further, the entire surface of the transparent conductive layer C was coated with a second metal layer formed of an alloy containing palladium and copper in silver serving as a main component (obtained from Furuya Metal Co., Ltd., product name: APC-TR) with an average thickness of 5 nm. Moreover, the entire surface of the second metal layer formed was coated with ITO serving as a transparent conductive layer D with an average thickness of 10 nm.

Next, the first and second substrates were pasted with each other using a double-face tape (LA-50 obtained from Nitto Denko Corporation), to produce a crack resistance test sample.

A plurality of pasted crack resistance test samples were produced, and a crack resistance test was performed in the state that the transparent conductive layers coating the entire surfaces of the substrates were included in the samples.

<Crack resistance test>

In the crack resistance test, the produced crack resistance test samples were processed by heating under three-dimensional processing conditions for forming three-dimensionally curved surfaces.

The temperature of the convex molding dies (with a spherical shape) used for three-dimensional processing was 145 degrees C. The curvature radius of the convex molding dies (with a spherical shape) was 50 mm, 60 mm, 65 mm, 87 mm, and 130 mm. The test results are presented in Table 1.

(Comparative experiment)

A crack resistance test sample was produced in the same manner as in the verification experiments except that unlike in the verification experiments, the entire surfaces of the substrates were coated with ITO with an average thickness of 100 nm as an electrode layer. The test result is presented in Table 1.

Table 1

| | | Molding die curvature radius (mm) | Constitution of first and second electrode layers | | | Evaluation result |
|---|---|---|---|---|---|---|
| | | | Transparent conductive layers A and C | First and second metal layers | Transparent conductive layers B and D | Presence or absence of crack |
| Experiment | 1 | 60 | ITO (10 nm) | Metal layer (5 nm) | ITO (10 nm) | Absent |
| | 2 | 65 | ITO (10 nm) | Metal layer (5 nm) | ITO (10 nm) | Absent |
| | 3 | 87 | ITO (10 nm) | Metal layer (5 nm) | ITO (10 nm) | Absent |
| | 4 | 130 | ITO (10 nm) | Metal layer (5 nm) | ITO (10 nm) | Absent |
| | 5 | 50 | ITO (10 nm) | Metal layer (5 nm) | ITO (10 nm) | Present |
| Comparative experiment | 1 | 87 | ITO (100 nm) | | | Present |

It was confirmed that in Verification experiments 1 to 5, the laminate-type electrode layers were cracked when the curvature radius of the convex molding dies (with a spherical shape) was 50 mm, but the laminate-type electrode layers were not cracked when the curvature radius of the convex molding dies (with a spherical shape) was in the range of from 60 mm through 130 mm and processing of three-dimensionally curved surfaces were successful.

On the other hand, it was confirmed that in Comparative experiment, the ITO transparent conductive layer having an average thickness of 100 nm coating the entire surfaces of the substrates was cracked when the curvature radius of the convex molding dies (with a spherical shape) was 87 mm.

(Example 1)

<From contour cutting of first substrate to formation of electrochromic layer>

First, a hard coat layer-added polycarbonate substrate having a thickness of 0.3 mm (product number: UC2-075, obtained from Meihan Vacuum Industry Co., Ltd., with a glass transition temperature Tg of 151 degrees C) was cut into an oval shape having a longer diameter of 80 mm and a shorter diameter of 55 mm, to prepare the substrate as a first substrate (S1 in FIG. 3).

Next, a metal mask for forming a film only on a desired area was set on the substrate, and an ITO film serving as a transparent conductive layer A was formed by a sputtering method with an average thickness of 5 nm. The film formation area was about 15 $cm^2$ (S2 in FIG. 3).

Further, with the mask maintained, a first metal layer formed of an alloy containing palladium and copper in silver serving as a main component (obtained from Furuya Metal Co., Ltd., product name: APC-TR) was formed on the transparent conductive layer A with an average thickness of 3 nm.

Subsequently, with the mask maintained, an ITO film serving as a transparent conductive layer B was formed on the first metal layer with an average thickness of 5 nm. The resultant was a first electrode layer (S2 in FIG. 3).

The transparent conductive layer A and the transparent conductive layer B were formed on the film formation region illustrated in FIG. 4. FIG. 4 is a top view illustrating an example of the region of the substrate on which the transparent conductive layers were formed in Example. In the present Example, the area of the film formation region was about 15 $cm^2$.

Next, the surface of the transparent conductive layer B was coated with a titanium oxide nanoparticle dispersion

liquid (product name: SP210, obtained from Showa Titanium Co., Ltd., with an average particle diameter of about 20 nm) by a spin coating method, and annealed at 60 degrees C for 15 minutes, to form a nanostructure semiconductor material formed of a titanium oxide particle film having a thickness of about 1.0 micrometer.

Successively, the titanium oxide particle film was coated with a 2,2,3,3-tetrafluoropropanol solution containing a compound represented by Structural formula 1 as an electrochromic compound (1.5% by mass) by a spin coating method. Subsequently, the resultant was annealed at 60 degrees C for 10 minutes, to make the titanium oxide particle film carry the electrochromic compound (by adsorption) and form an electrochromic layer (S3 in FIG. 3).

[Structural formula 1]

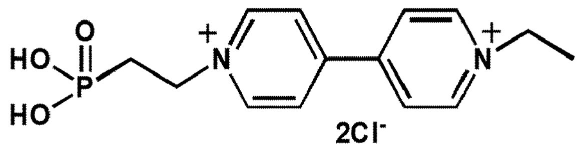

<From cutting of second substrate to formation of deterioration preventing layer>

A substrate having the same shape as the first substrate was prepared as a second substrate (S5 in FIG. 3), and a second electrode layer having the same configuration as the configuration on the first substrate was formed (S6 in FIG. 3).

Next, the surface of the second electrode layer was coated with an ATO particle dispersion liquid (with an ATO average particle diameter of 20 nm, a dispersion liquid obtained by adding a urethane-based binder HW140SF (obtained from DIC Corporation) (6% by mass) in a 6% by mass 2,2,3,3,-tetrafluoropropanol solution) by a spin coating method and annealed at 60 degrees C for 15 minutes, to form a deterioration preventing layer formed of an ATO particle film having an average thickness of about 1.0 micrometer (S7 in FIG. 3).

<Formation of electrolyte layer and pasting>

Successively, the exposed surface of the electrochromic layer formed on the first substrate was coated with an electrolyte solution in which polyethylene diacrylate, a photo initiator (product name: IRG184, obtained from BASF GamH), and an electrolyte (1-ethyl-3-methyl imidazolium salt) were mixed at a mass ratio (100:5:40) (S4 in FIG. 3). The electrolyte solution-coated surface and the deterioration preventing layer-formed surface of the second substrate were pasted with each other, and irradiated with UV using UE031-326-01CH2-003 obtained from Eye Graphics Co., Ltd., to cure the electrolyte layer and produce a flat plate-shaped electrochromic element (S8 in FIG. 3).

<Thermoforming (three-dimensional processing)>

The produced electrochromic element was inserted between convex molding dies (with a spherical shape, and a curvature radius of about 90 mm) while the molding dies were heated to a temperature of 145 degrees C, to produce an electrochromic element having a three-dimensionally curved surface (S9 in FIG. 3).

"Color development/decolorization operations" of the produced electrochromic element were evaluated in the manner described below, and "visible transmittance (%) of first electrode layer" and "surface resistance (Ω/□) of first electrode layer" were measured.

<Color development/decolorization operations>

An end portion of the first substrate and an end portion of the second substrate were partially peeled, to form a contact portion of the first electrode layer and a contact portion of the second electrode layer. A voltage of -3.5 V was applied for 3 seconds across the first electrode layer and the second electrode layer in a manner that the first electrode layer would function as a negative pole.

Further, a voltage of +3.5 V was applied for 2 seconds across the first electrode layer and the second electrode layer.

It was visually evaluated whether the electrochromic element would be able to develop a magenta color attributable to the electrochromic compound when the voltage of -3.5 V was applied and whether the electrochromic element would be able to decolorize the electrochromic pigment when the voltage of +3.5 V was applied. The evaluation results are presented in Table 2.

[Evaluation criteria]

A: The electrochromic element was able to decolorize the electrochromic pigment.
B: The electrochromic element was unable to decolorize the electrochromic pigment.

<Visible transmittance (%) of first electrode layer>

The visible transmittance (%) of the first electrode layer was measured three times under the measurement conditions described below using a LCD evaluating apparatus (obtained from Otsuka Electronics Co., Ltd., instrument name: LCD-5200) after the first electrode layer was formed on the first substrate in the method for producing the electrochromic element. The average of the three measured values was used as the visible transmittance (%). In the present Example, only the first electrode layer was measured because the first substrate and the second substrate were the same as each other and the first electrode layer and the second electrode layer were the same as each other.

<Measurement conditions>

- Light source: D64
- Range of wavelengths to be measured: from 380 nm through 780 nm

<Surface resistance (Ω/□) of first electrode layer>

The surface resistance (sheet resistance) of the first substrate on which the first electrode layer of which visible transmittance was measured was formed was measured with a resistivity meter (instrument name: ROLESTER MP-T610, obtained from Mitsubishi Chemical Analytic Co., Ltd.). The result is presented in Table 2.

(Examples 2 to 9 and Comparative Examples 1 to 4)

Electrochromic elements were produced in the same manner as in Example 1 except that unlike in Example 1, the average thickness of the transparent conductive layers and the average thickness of the metal layers were changed as presented in Table 2. The electrochromic elements were evaluated in the same manner as in Example 1.

Table 2

| | | Constitution of first and second electrode layers | | | Evaluation result | | |
|---|---|---|---|---|---|---|---|
| | | Transparent conductive layers A and C | First and second metal layers | Transparent conductive layers B and D | Color development/ decolorization operations | Visible transmittance (%) | Surface resistance (Ω/□) |
| Ex. | 1 | ITO (5 nm) | Metal layer (3 nm) | ITO (5 nm) | A | 78.7 | 229 |
| | 2 | ITO (10 nm) | Metal layer (3 nm) | ITO (10 nm) | A | 80.0 | 131 |
| | 3 | ITO (5 nm) | Metal layer (5 nm) | ITO (5 nm) | A | 81.8 | 74 |
| | 4 | ITO (10 nm) | Metal layer (5 nm) | ITO (10 nm) | A | 80.8 | 71 |
| | 5 | ITO (12 nm) | Metal layer (3 nm) | ITO (12 nm) | A | 79.3 | 116 |
| | 6 | ITO (12 nm) | Metal layer (5 nm) | ITO (12 nm) | A | 76.7 | 52 |
| | 7 | ITO (12 nm) | Metal layer (9 nm) | ITO (12 nm) | A | 68.2 | 45 |
| | 8 | ITO (10 nm) | Metal layer (10 nm) | ITO (10 nm) | A | 61.5 | 33 |
| | 9 | ITO (10 nm) | Metal layer (15 nm) | ITO (10 nm) | A | 43.2 | 24 |
| Comp. Ex. | 1 | ITO (15 nm) | Metal layer (3 nm) | ITO (15 nm) | B | 78.2 | 106 |
| | 2 | ITO (20 nm) | Metal layer (3 nm) | ITO (20 nm) | B | 76.6 | 89 |
| | 3 | ITO (15 nm) | Metal layer (5 nm) | ITO (15 nm) | B | 79.0 | 50 |
| | 4 | ITO (20 nm) | Metal layer (5 nm) | ITO (20 nm) | B | 77.6 | 47 |

As indicated by the results of Table 2, when the average thickness of the transparent conductive layers A to D (ITO films) was 15 nm or greater, the transparent conductive layers A to D (ITO films) were cracked regardless of the average thickness of the first and second metal layers, and normal color development/decolorization operations were

unavailable.

From these results, it was confirmed that color development/decolorization operations were available without hindrance when the average thickness of the transparent conductive layers was in the range of 5 nm or greater but 12 nm or less.

Based on the results of Examples 2, 4, 8, and 9, FIG. 5 plots an example of the relationship between the average thickness of the metal layers and the visible transmittance (%). From these results, it was found that the electrochromic element performed normal color development/decolorization operations when the film thickness of the metal layers was in the range of 3 nm or greater but 15 nm or less. On the other hand, it was found that when the average thickness of the metal layers was 10 nm or greater, the visible transmittance was 70% or lower as plotted in FIG. 5, suggesting a poor performance as an eyeglass lens.

From these results, it was found that the average thickness of the metal layers was preferably less than 10 nm and more preferably 8 nm or less.

(Example 10)

A resin (polycarbonate resin) was injection-molded on the concave surface-side of the electrochromic element of Example 6 in the manner described below, to increase the thickness.

[Injection molding]

The electrochromic element of Example 6 that had already been curved was set in the center of a concave molding die of an injection molding machine including molding dies having a curved surface with a curvature radius of about 90 mm, in a manner that the convex surface side of the electrochromic element would fit the concave surface of the molding die.

Next, the concave molding die and a convex molding die of the injection molding machine were mated with each other to close the mold, and a polycarbonate resin (obtained from Teijin Limited, product name: PANLITE (registered trademark) SH1126Z) serving as a resin for increasing the thickness was injection-molded, to produce a thickness-increased electrochromic element.

Next, "color development/decolorization operations" of the thickness-increased electrochromic element were confirmed in the same manner as in Example 6.

As a result, it was confirmed that the thickness-increased electrochromic element also performed color development/decolorization operations without hindrance.

Aspects and embodiments of the present disclosure are, for example, as follows.

<1> An electrochromic element including:

a first substrate;
a first electrode layer including a transparent conductive layer A, a first metal layer, and a transparent conductive layer B;
an electrochromic layer;
an electrolyte layer;
a second electrode layer including a transparent conductive layer C, a second metal layer, and a transparent conductive layer D; and
a second substrate
wherein the electrochromic element includes the electrolyte layer between the first electrode layer and the second electrode layer,
the transparent conductive layer A, the transparent conductive layer B, the transparent conductive layer C, and the transparent conductive layer D contain at least one selected from the group consisting of tin-doped indium oxide (ITO), fluorine-doped tin oxide (FTO), and antimony-doped tin oxide (ATO),
the first metal layer and the second metal layer contain at least one selected from the group consisting of silver alloys containing at least one of palladium, gold, platinum, and copper in silver, and silver, and
an average thickness of the transparent conductive layer A, the transparent conductive layer B, the transparent conductive layer C, and the transparent conductive layer D is 5 nm or greater but 12 nm or less.

<2> The electrochromic element according to <1>,
wherein an average thickness of the first metal layer and the second metal layer is 5 nm or greater but 8 nm or less.
<3> The electrochromic element according to <1> or <2>,
wherein visible transmittance of the first electrode layer is 70% or higher.

<4> The electrochromic element according to any one of <1> to <3>,
wherein the electrochromic element has a three-dimensionally curved surface.
<5> The electrochromic element according to <4>,
wherein a curvature radius of the three-dimensionally curved surface is 60 mm or greater but 130 mm or less.
<6> The electrochromic element according to any one of <1> to <5>, further including
a deterioration preventing layer configured to prevent deterioration of the second electrode layer.
<7> An electrochromic light control lens including
the electrochromic element according to any one of <1> to <6>.

The electrochromic element according to any one of <1> to <6>, and the electrochromic light control lens according to <7> can solve the various problems in the related art and achieve the object of the present disclosure.

## Claims

1. An electrochromic element comprising:

   a first substrate;
   a first electrode layer including a transparent conductive layer A, a first metal layer, and a transparent conductive layer B;
   an electrochromic layer;
   an electrolyte layer;
   a second electrode layer including a transparent conductive layer C, a second metal layer, and a transparent conductive layer D; and
   a second substrate
   wherein the electrochromic element comprises the electrolyte layer between the first electrode layer and the second electrode layer,
   the transparent conductive layer A, the transparent conductive layer B, the transparent conductive layer C, and the transparent conductive layer D contain at least one selected from the group consisting of tin-doped indium oxide (ITO), fluorine-doped tin oxide (FTO), and antimony-doped tin oxide (ATO),
   the first metal layer and the second metal layer contain at least one selected from the group consisting of silver alloys containing at least one of palladium, gold, platinum, and copper in silver, and silver, and
   an average thickness of the transparent conductive layer A, the transparent conductive layer B, the transparent conductive layer C, and the transparent conductive layer D is 5 nm or greater but 12 nm or less.

2. The electrochromic element according to claim 1,
   wherein an average thickness of the first metal layer and the second metal layer is 5 nm or greater but 8 nm or less.

3. The electrochromic element according to claim 1 or 2,
   wherein visible transmittance of the first electrode layer is 70% or higher.

4. The electrochromic element according to any one of claims 1 to 3,
   wherein the electrochromic element has a three-dimensionally curved surface.

5. The electrochromic element according to claim 4,
   wherein a curvature radius of the three-dimensionally curved surface is 60 mm or greater but 130 mm or less.

6. The electrochromic element according to any one of claims 1 to 5, further comprising
   a deterioration preventing layer configured to prevent deterioration of the second electrode layer.

7. An electrochromic light control lens comprising
   the electrochromic element according to any one of claims 1 to 6.

FIG. 1

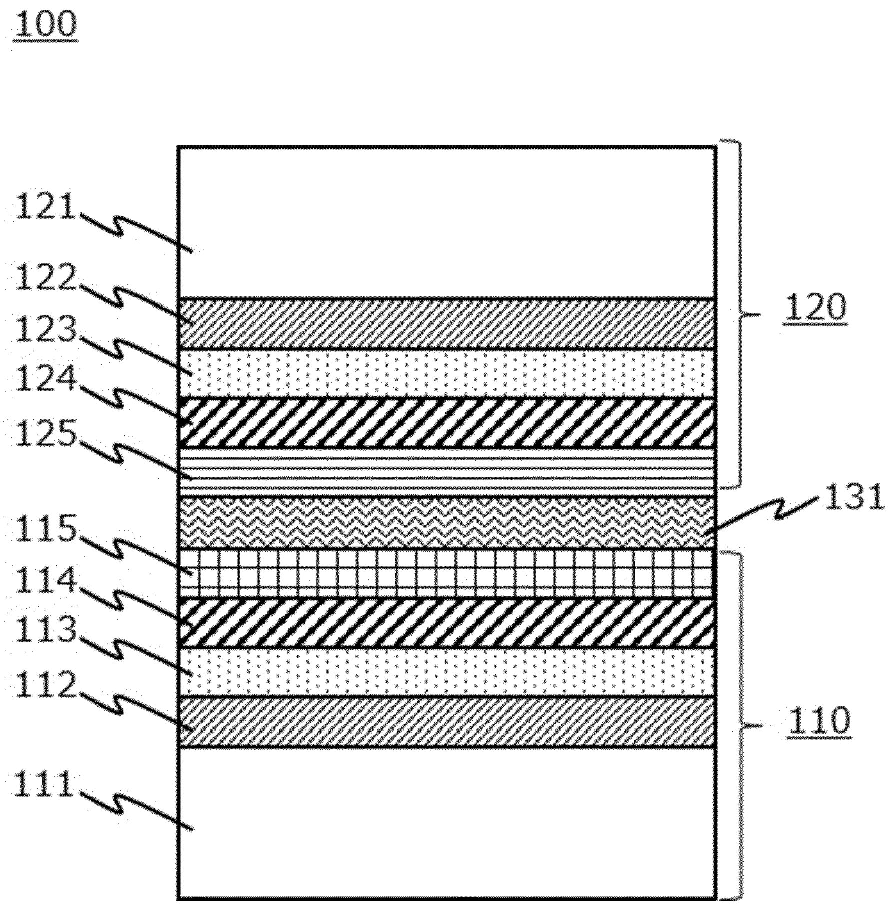
100
121
122
123
124
125
120
131
115
114
113
112
110
111

FIG. 2A

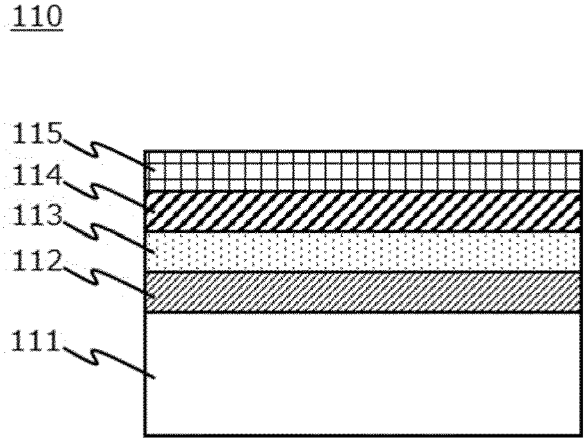
110
115
114
113
112
111

FIG. 2B

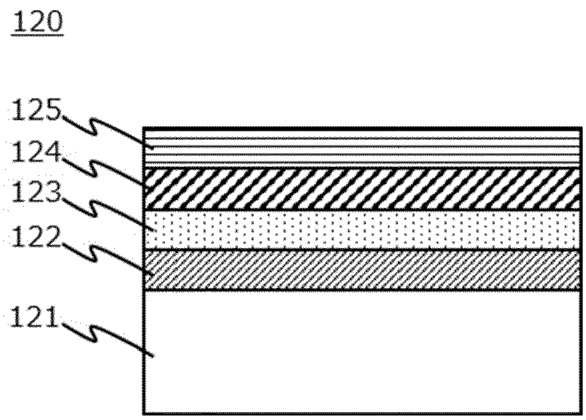
120
125
124
123
122
121

FIG. 3

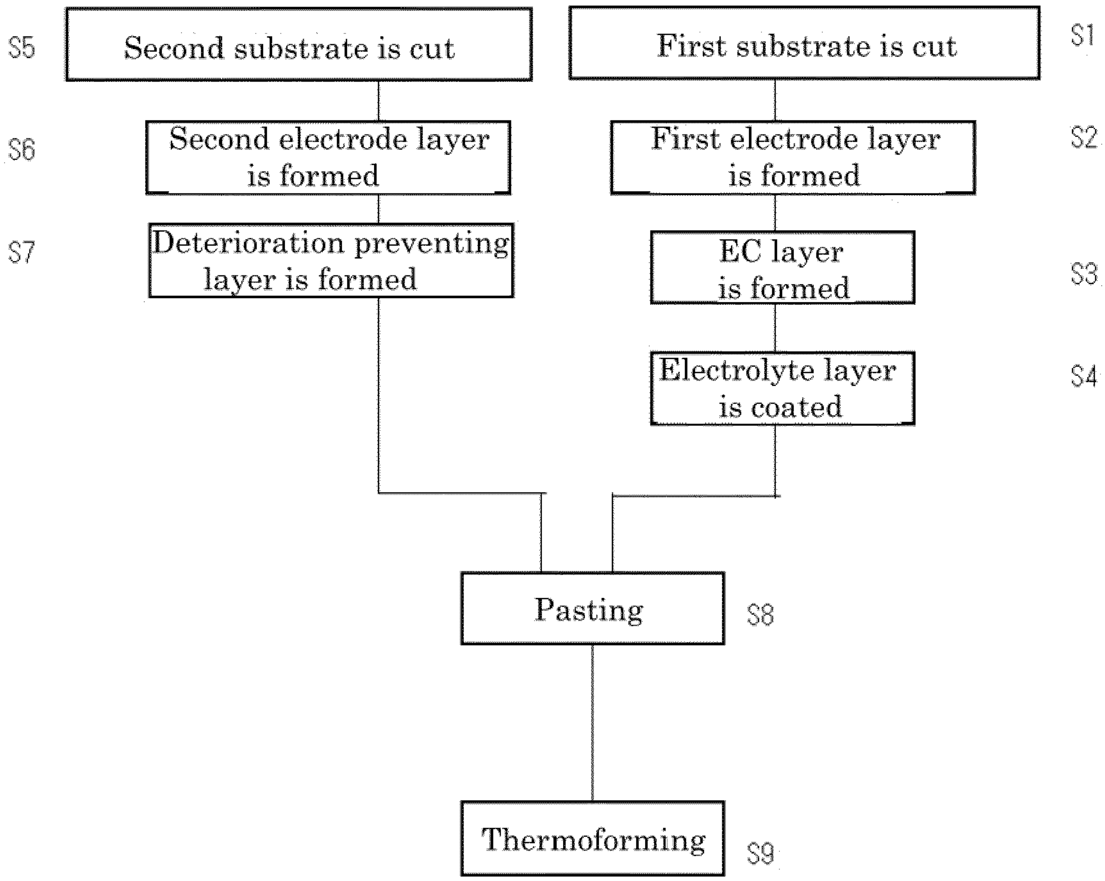
S5
Second substrate is cut
First substrate is cut
S1
S6
Second electrode layer is formed
First electrode layer is formed
S2
S7
Deterioration preventing layer is formed
EC layer is formed
S3
Electrolyte layer is coated
S4
Pasting
S8
Thermoforming
S9

FIG. 4

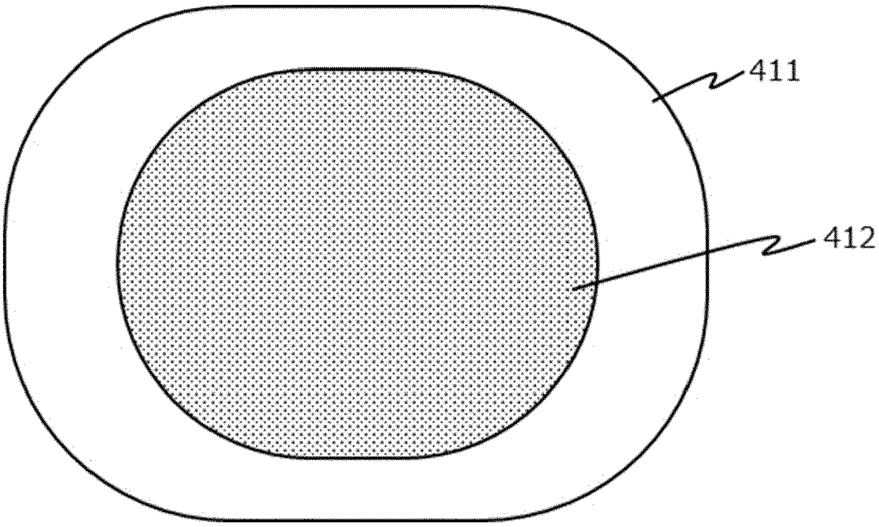
411
412

FIG. 5

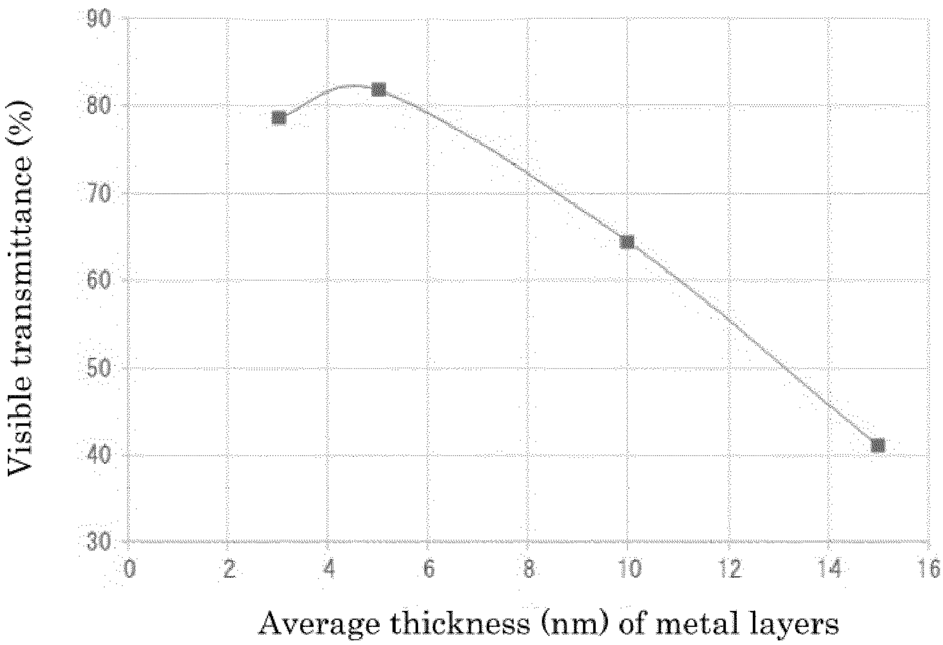
Visible transmittance (%)
90
80
70
60
50
40
30
0
2
4
6
8
10
12
14
16
Average thickness (nm) of metal layers

Europäisches Patentamt
European Patent Office
Office européen des brevets

# EUROPEAN SEARCH REPORT

Application Number
EP 21 20 9079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/190759 A1 (VALENTIN EMMANUEL [FR] ET AL) 14 August 2008 (2008-08-14)<br>* paragraphs [0048], [0071]; claims 26,30; figure 1; table at [0073] *<br>----- | 1-3,6 | INV.<br>G02F1/155<br>G02C7/10 |
| X<br><br>Y | CN 206 812 540 U (HEFEI VDI VARIABLE COLOR GLASS CO LTD)<br>29 December 2017 (2017-12-29)<br>* paragraphs [0001], [0008], [0019] - [0021]; figure 2; table at par. [0024] *<br>----- | 1-5<br><br>7 | |
| Y | US 2017/329197 A1 (YASHIRO TOHRU [JP] ET AL) 16 November 2017 (2017-11-16)<br>* paragraphs [[0011]], [[0070]] - [[0072]] *<br>----- | 7 | |
| | | | TECHNICAL FIELDS SEARCHED (IPC) |
| | | | G02F<br>G02C |

1 The present search report has been drawn up for all claims

| Place of search | Date of completion of the search | Examiner |
|---|---|---|
| Munich | 16 March 2022 | Queneuille, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 20 9079

This annex lists the patent family members relating to the patent documents cited in the above-mentioned European search report. The members are as contained in the European Patent Office EDP file on
The European Patent Office is in no way liable for these particulars which are merely given for the purpose of information.

16-03-2022

| Patent document cited in search report | Publication date | Patent family member(s) | Publication date |
|---|---|---|---|
| US 2008190759 A1 | 14-08-2008 | CN 101218536 A | 09-07-2008 |
| | | EP 1883856 A2 | 06-02-2008 |
| | | FR 2886419 A1 | 01-12-2006 |
| | | JP 2008542804 A | 27-11-2008 |
| | | KR 20080011401 A | 04-02-2008 |
| | | US 2008190759 A1 | 14-08-2008 |
| | | WO 2007000542 A2 | 04-01-2007 |
| CN 206812540 U | 29-12-2017 | NONE | |
| US 2017329197 A1 | 16-11-2017 | CN 107111196 A | 29-08-2017 |
| | | EP 3221743 A1 | 27-09-2017 |
| | | JP 6798098 B2 | 09-12-2020 |
| | | JP 2016105150 A | 09-06-2016 |
| | | US 2017329197 A1 | 16-11-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4105537 B
- JP 6064761 B
- JP 2012009148 A
- JP 6265968 B
- JP 3955641 B
- JP 2007171781 A
- JP 2008116718 A


### Non-patent literature cited in the description


- Navigating the Color Palette of Solution-ProceSSable Electrochromic PolymerS. *ChemiStry of MaterialS review,* 2011, vol. 23, 397-415
- *MacromoleculeS,* 1996, vol. 29, 7629-7630
- Electrochromic Organic Matallic Hybrid PolymerS. *Polymer journal,* vol. 41 (7